# EUROPEAN PATENT SPECIFICATION

(11) **EP 1 187 994 B1**
(45) Date of publication and mention of the grant of the patent: **09.11.2005**
(21) Application number: 00944482.9
(22) Date of filing: 24.05.2000
(51) Int. Cl.: F16B 2/06, F16B 7/04, F16B 7/18, F16L 3/10

(54) **CLAMPING DEVICE FOR MOUNTING ON A TUBULAR MEMBER**
KLEMMVORRICHTUNG ZUM BEFESTIGEN AUF EINEM RÖHRENFÖRMIGEN BAUTEIL
DISPOSITIF DE PREHENSION D'UN ELEMENT TUBULAIRE

(30) Priority: 18.06.1999 SE 9902363
(43) Date of publication of application: 20.03.2002
(73) Proprietor: CUE DEE PRODUKTER AB, 915 21 Robertsfors (SE)
(72) Inventor: GUSTAFSSON, Karl, Martin, S-931 15 Skelleftea (SE)
(74) Representative: Zetterström, Alf
(86) International application number: PCT/SE2000/001050
(87) International publication number: WO 2000/079136

(56) References cited:
- EP-A1- 0 797 011
- WO-A1-98/37355
- CH-A5- 630 160
- FR-A1- 2 606 467
- US-A- 2 883 135

## Description

The present invention relates to a clamping device for mounting on a tubular member (WO 98/37355).

More particularly, the invention relates to such a clamping device of the kind comprising two clamping jaws which are intended to be placed in front of each other on mutually opposite sides of said member and each of which comprises two separate jaw members and a common elongate counter support for said jaw members, located behind them, and two clamping bolts which are intended to be placed each on one side of the tubular member and by means of which clamping forces can be applied on the counter supports of the two clamping jaws in order to bring the two jaw members of each clamping jaw into contact under pressure against the tubular member.

A serious drawback of previously known clamping devices of said kind is that, in certain cases, it has not been possible to secure a lasting firm holding of the clamping device on the tubular member. The fact is that the holding of the clamping device on said member may become highly defective if it may happen that said device and said member are subjected to mutually different thermal effects, for instance, as a consequence of the fact that they have mutually different material properties. The abovementioned risk is especially high when the tubular member has a large diameter.

The invention has for its purpose to provide an improved clamping device of the kind initially specified in which the abovementioned disadvantage of the previously known devices is eliminated.

The clamping device, according to the invention proposed for said purpose, is primarily characterized in that the jaw members are arranged to be brought into resilient contact under pressure with the tubular member.

In order to make it possible to bring the jaw members into such a contact with the tubular member, the jaw members may be mounted resiliently movable on the counter supports.

However, in accordance with a preferred embodiment of the invention, the clamping device may instead be arranged to permit a limited resilient relative movement between the counter supports of the two clamping jaws in a direction transverse to the longitudinal direction of the counter supports. In this case, the clamping device may suitably be arranged to transmit clamping forces, generated by means of the clamping bolts, to the counter support of at least one of the two clamping jaws through the intermediary of intermediate spring means.

Said spring means may advantageously consist of compression springs, located behind said counter support and preferably formed by cup springs placed on the clamping bolts or on bushings, mounted on said bolts.

In order to avoid a concentration to one single place of the force applied on the tubular member by means of a jaw member, each jaw member may suitably be arranged to be brought into and held in contact with the tubular member at two places, located at a short distance from each other in the circumferential direction of said member.

For this purpose, the jaw members may have a trough-like cross-sectional shape at their front sides and each jaw member may be arranged to be supported for limited swivelling movement around an axis parallel to the longitudinal direction of the tubular member at one end of a holder, adapted to be fastened to the appurtenant counter support with its other end.

In order to make it possible to mount one and the same clamping device on different tubular members having diameters varying within wide limits, the two jaw members of each clamping jaw may preferably be arranged to be mounted on the appurtenant counter support at a variable distance from each other in the longitudinal direction of said counter support. Moreover, the clamping bolts may be arranged to be placed at a variable distance from each other in the longitudinal direction of the counter supports.

Below the invention is described in further detail with reference to the accompanying drawings, in which:-
Figure 1 shows a plan view of a clamping device according to an embodiment of the invention, selected by way of example only, said device being mounted on a mast, having the shape of an upright tubular member, in order to serve as a supporting means for antennas or other means intended to be mounted on the mast,
Figure 2 shows a perspective partial view on an enlarged scale, illustrating a portion of said clamping device shown in the lower right hand section of Figure 1,
Figure 3 shows a cross-sectional view on a still further enlarged scale, illustrating the connection between one of two clamping bolts forming part of the device and each of two jaw member counter supports, and
Figure 4 shows an exploded perspective view, illustrating how a jaw member can be mounted on a rear counter support through the intermediary of an intermediate holder.

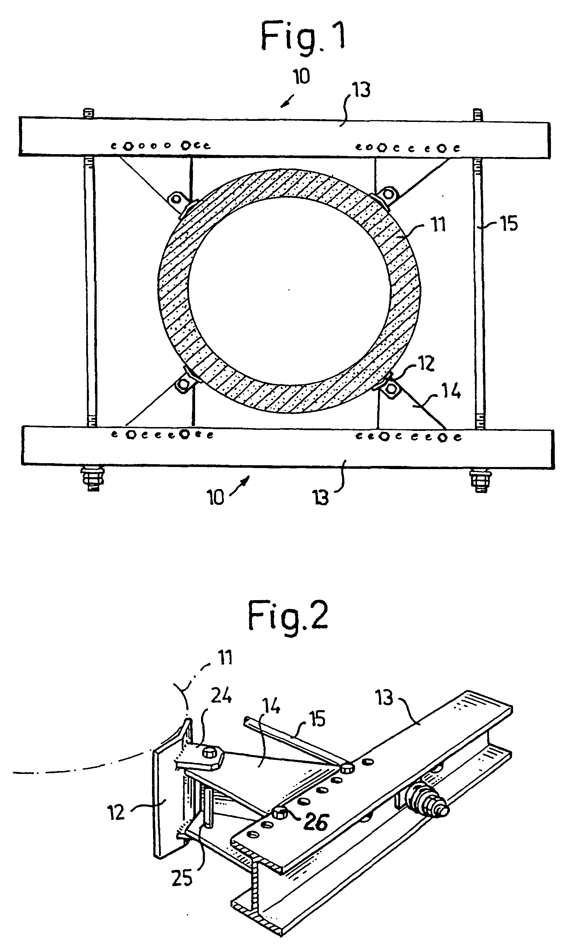

The clamping device shown in Figure 1 comprises two clamping jaws, generally designated 10, which are placed in front of each other on mutually opposite sides of a tubular concrete mast 11.

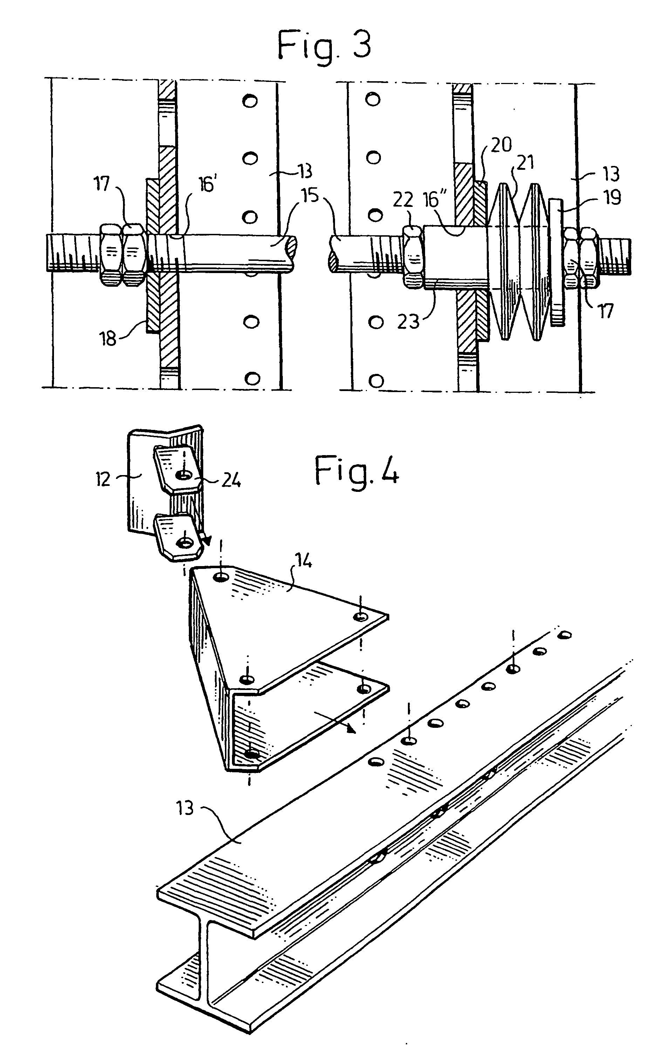

Each clamping jaw 10 comprises two separate jaw members 12 and a common elongate counter support 13 for said jaw members, located behind them. As may best be seen from Figures 2 and 4, said counter support has the shape of an I-beam on which the two jaw members are mounted each by means of a holder 14.

Moreover, the clamping device also comprises two clamping bolts 15 which are located each on one side of mast 11 and by means of which the two jaw members 12 of each clamping jaw 10 are held in contact under pressure against mast 11. For this purpose, clamping bolts 15, which preferably consist of bars threaded along their whole length, extend in transverse directions between the two counter support beams 13 and through bores 16' and 16" provided in the web portions of said beams. Furthermore, at their ends projecting on the outer side of the web portions of beams 13, the clamping bolts are provided with nuts 17 by means of which clamping forces can be applied on beams 13.

In the illustrated embodiment, the nut 17 located at one end of each clamping bolt 15 lies in butt contact with the web portion of one beam 13 via a washer 18, while the nut 17 located at the other end of each clamping bolt instead rests resiliently against the web portion of the other beam through two washers 19 and 20 and four cup springs 21 placed between said washers. Washer 20 and cup springs 21 are threaded on a bushing 23 which is mounted on the clamping bolt and clamped between washer 19 and a nut 22 and by means of which the clamping bolt is displaceably journalled in bore 16" in the web portion of the beam in question.

Cup springs 21 have for their purpose to permit a limited resilient relative movement between the two beams 13 in a direction transverse to the longitudinal direction of said beams in order hereby to ensure that jaw members 12 will be held in resilient contact with mast 11. This means that the clamping device will be firmly held in its mounted position on the mast even in such cases when it otherwise might happen that it will slide down on the mast from its original position as a consequence of a defective holding.

As may best be seen from Figures 2 and 4, each jaw member 12 is formed by a rectangular plate which is slightly bent around its vertical centre line and which comprises two flanges, extending at an obtuse angle from said line. At its rear side, said plate is provided with bearing tongues 24 by means of which it is mounted for limited swivelling movement at the front end of holder 14 which consists of a double bent plate and in relation to which said plate may be swung around a pivot axis formed by a bolt 25. At its rear end, holder 14 is mounted on the two parallel front flange portions of beam 13 by means of two bolts 26. As a consequence of the above-described design each jaw member 12 and the above-described manner of mounting it, each jaw member may be brought into contact with mast 11 at two places located at a short distance from each other in the circumferential direction of the mast.

In order to make it possible to mount the clamping device on masts and other tubular members having greatly differing diameters, holders 14 are arranged to be mounted on beams 13 at a stepwise variable distance from each other in the longitudinal direction of the beams. Furthermore, the clamping bolts are also arranged to be placed at a stepwise variable distance from each other in the longitudinal direction of the beams.

The various parts of the clamping device may preferably be made from steel and protected against corrosion through hot-galvanization.

The invention is not restricted to the embodiment above described and shown in the drawings. Instead, many other embodiments are feasible within the scope of the invention as defined in the following claims. By way of example, it could be mentioned that the jaw members and the holders serving to support said members may have many other shapes than those shown in the drawings. Finally, it is pointed out that the clamping device according to the invention may also be utilized for instance as a supporting means for a tubing or the like which may extend in any desired direction, i.e. in a vertical as well as in a horizontal or an inclined direction.

## Claims

1. Clamping device for mounting on a tubular member (11), said device comprising two clamping jaws (10) which are intended to be placed in front of each other on mutually opposite sides of said member (11) and each of which comprises two separate jaw members (12) and a common elongate counter support (13) for said jaw members, located behind them, and two clamping bolts (15) which are intended to be placed each on one side of the tubular member (11) and by means of which clamping forces can be applied on the counter supports (13) of the two clamping jaws (10) in order to bring the two jaw members (12) of each clamping jaw (10) into contact under pressure against the tubular member (11), **characterized in that** it is arranged to transmit clamping forces, generated by means of the clamping bolts (15), to the counter support (13) of at least one of the two clamping jaws (10) via compression springs (21), located behind said counter support (13).

2. Clamping device according to claim 1, **characterized in that** said compression springs consist of cup springs (21) placed on the clamping bolts (15) or on bushings (23), mounted on said bolts.

3. Clamping device according to claim 1 or 2, **characterized in that** each jaw member (12) is arranged to be brought into and held in contact with the tubular member (11) at two places, located at a short distance from each other in the circumferential direction of said member.

4. Clamping device according to claim 3, **characterized in that** the jaw members (12) have a trough-like cross-sectional shape at their front sides and that each jaw member (12) is arranged to be supported for limited swivelling movement around an axis (25) parallel to the longitudinal direction of the tubular member (11) at one end of a holder (14), adapted to be fastened to the appurtenant counter support (13) with its other end.

5. Clamping device according to any of the preceding claims, **characterized in that** the two jaw members (12) of each clamping jaw (10) are arranged to be mounted on the appurtenant counter support (13) at a variable distance from each other in the longitudinal direction of said counter support.

6. Clamping device according to claim 5, **characterized in that** the clamping bolts (15) are arranged to be placed at a variable distance from each other in the longitudinal direction of the counter supports (13).

## Patentansprüche

1. Klemmvorrichtung zum Befestigen auf einem röhrenförmigen Bauteil (11), wobei die Vorrichtung zwei Klemmbacken (10) umfasst, die voreinander auf gegenüberliegenden Seiten des Bauteils (11) angeordnet werden sollen und wobei jede von ihnen zwei getrennte Backenbauteile (12) und einen gemeinsamen länglichen Gegenträger (13) für die Backenbauteile umfasst, der hinter diesen angeordnet ist, und zwei Klemmbolzen (15), die jeweils auf einer Seite des röhrenförmigen Bauteils (11) angeordnet werden sollen und mit deren Hilfe Klemmkräfte auf die Gegenträger (13) der zwei Klemmbacken (10) ausgeübt werden können, um die zwei Backenbauteile (12) jedes Klemmbackens (10) unter Druck gegen den röhrenförmigen Bauteil (11) in Kontakt zu bringen, **dadurch gekennzeichnet, dass** sie so angeordnet ist, dass sie Klemmkräfte, die durch die Klemmbolzen (15) erzeugt werden, auf den Gegenträger (13) von mindestens einem der zwei Klemmbacken (10) über Druckfedern (21) überträgt, die hinter dem Gegenträger (13) angeordnet sind.

2. Klemmvorrichtung nach Anspruch 1, **dadurch gekennzeichnet, dass** die Druckfedern aus Tellerfedern (21) bestehen, die auf den Klemmbolzen (15) oder auf Buchsen (23) angeordnet sind, die an den Bolzen befestigt sind.

3. Klemmvorrichtung nach Anspruch 1 oder 2, **dadurch gekennzeichnet, dass** jeder Backenbauteil (12) so angeordnet ist, dass er mit dem röhrenförmigen Bauteil (11) an zwei Stellen in Kontakt gebracht und gehalten wird, die sich in einem kurzen Abstand voneinander in der Umfangsrichtung des Bauteils befinden.

4. Klemmvorrichtung nach Anspruch 3, **dadurch gekennzeichnet, dass** die Backenbauteile (12) eine rinnenartige Querschnittform an ihren Vorderseiten aufweisen und dass jeder Backenbauteil (12) so angeordnet ist, dass er für eine begrenzte Drehbewegung um eine Achse (25) herum gestützt wird, die zur Längsrichtung des röhrenförmigen Bauteils (11) an einem Ende einer Haltevorrichtung (14) parallel ist, die geeignet ist, mit ihrem anderen Ende an dem dazugehörigen Gegenträger (13) befestigt zu werden.

5. Klemmvorrichtung nach einem der vorhergehenden Ansprüche, **dadurch gekennzeichnet, dass** die zwei Backenbauteile (12) jeder Klemmbacke (10) angeordnet sind, um an dem dazugehörigen Gegenträger (13) in einem in der Längsrichtung des Gegenträgers variablen Abstand voneinander befestigt zu werden.

6. Klemmvorrichtung nach Anspruch 5, **dadurch gekennzeichnet, dass** die Klemmbolzen (15) angeordnet sind, um in einem in der Längsrichtung der Gegenträger (13) variablen Abstand voneinander positioniert zu werden.

## Revendications

1. Dispositif de serrage pour montage sur un élément tubulaire (11), ledit dispositif comprenant deux bras de serrage (10) qui sont destinés à être placés en face l'un de l'autre sur des côtés mutuellement opposés dudit élément (11) et chacun comprend deux éléments formant bras séparés (12) et un contre-support oblong commun (13) pour lesdits éléments formant bras, situé derrière eux, et deux boulons de serrage (15) qui sont destinés à être placés de chaque côté de l'élément tubulaire (11) et au moyen desquels des forces de serrage peuvent être appliquées sur les contre-supports (13) des deux bras de serrage (10) afin d'amener les deux éléments formant bras (12) de chaque bras de serrage (10) en contact sous pression contre l'élément tubulaire (11), **caractérisé en ce qu'**il est disposé pour transmettre des forces de serrage, générées au moyen des boulons de serrage (15), au contre-support (13) d'au moins un des deux bras de serrage (10) par l'intermédiaire de ressorts de pression (21), situés derrière ledit contre-support (13).

2. Dispositif de serrage selon la revendication 1, **caractérisé en ce que** lesdits ressorts de pression consistent en ressorts Belleville (21) placés sur les boulons de serrage (15) ou sur des douilles (23) montées sur lesdits boulons.

3. Dispositif de serrage selon la revendication 1 ou 2, **caractérisé en ce que** chaque élément formant bras (12) est disposé pour être amené et maintenu en contact avec l'élément tubulaire (11) au niveau de deux endroits, situés à une courte distance l'un de l'autre dans la direction périphérique dudit élément.

4. Dispositif de serrage selon la revendication 3, **caractérisé en ce que** les éléments formant bras (12) présentent une coupe transversale en forme de goulotte au niveau de leurs côtés avant et que chaque élément formant bras (12) est disposé pour être supporté pour un mouvement pivotant limité autour d'un axe (25) parallèle à la direction longitudinale de l'élément tubulaire (11) au niveau d'une extrémité d'un support (14), adapté pour être fixé au contre-support dépendant (13) avec son autre extrémité.

5. Dispositif de serrage selon l'une quelconque des revendications précédentes, **caractérisé en ce que** les deux éléments formant bras (12) de chaque bras de serrage (10) sont disposés pour être montés sur le contre-support dépendant (13) à une distance variable l'un de l'autre dans la direction longitudinale dudit contre- support.

6. Dispositif de serrage selon la revendication 5, **caractérisé en ce que** les boulons de serrage (15) sont disposés pour être placés à une distance variable l'un de l'autre dans la direction longitudinale des contre-supports (13).
